# EUROPÄISCHE PATENTSCHRIFT

(11) **EP 3 943 270 B1**
(45) Veröffentlichungstag und Bekanntmachung des Hinweises auf die Patenterteilung: **29.11.2023**
(21) Anmeldenummer: 21186539.9
(22) Anmeldetag: 20.07.2021
(51) Int. Cl.: B29C 43/20, B29C 45/16, B29C 45/14, B29C 48/07, B29C 48/16, B29C 65/70, B32B 7/06, B32B 7/12, B29C 65/36, B29C 65/76, B32B 27/08, B32B 27/32, B32B 27/34, C09J 5/06, B29C 48/08, B29C 48/21, B29C 48/49, B29C 35/02, B29C 43/18, B29B 17/02, B29K 23/00, B29K 75/00, B29K 77/00, B29C 35/08, B29C 48/00

(54) **VERFAHREN ZUR HERSTELLUNG EINES MEHRKOMPONENTEN-VERBUNDBAUTEILS**
METHOD FOR PRODUCING A MULTICOMPONENT COMPOSITE
PROCÉDÉ DE FABRICATION D'UN COMPOSANT COMPOSITE À COMPOSANT MULTIPLES

(30) Priorität: 22.07.2020 DE 102020119413
(43) Veröffentlichungstag der Anmeldung: 26.01.2022
(73) Patentinhaber: Universität Paderborn, 33098 Paderborn (DE)
(72) Erfinder: Moritzer, Elmar, 33175 Bad Lippspringe (DE); Hopp, Matthias, 33175 Bad Lippspringe (DE)
(74) Vertreter: Tarvenkorn, Oliver

(56) Entgegenhaltungen:
- WO-A2-99/58328
- DE-C2- 2 839 640
- US-A- 6 048 599
- US-A1- 2016 284 449
- Unknown: "Hot Melt Adhesives: Ingredient Selection & Formulation Tips", , 25. November 2021 (2021-11-25), Seiten 1-10, XP055865785, Gefunden im Internet: URL:https://adhesives.specialchem.com/sele ction-guide/hot-melt-adhesives [gefunden am 2021-11-25]

## Beschreibung

Die Erfindung betrifft ein Verfahren zur Herstellung eines Mehrkomponenten-Verbundbauteils, mit den Merkmalen des Oberbegriffs des Anspruchs 1.

Dem Recycling von Kunststoffen kommt angesichts des hohen weltweiten Verbrauchs an solchen Werkstoffen eine wesentliche Bedeutung zu. Neben dem Recycling von Verpackungen ist auch das Recycling von technischen Bauteilen Gegenstand aktueller Forschungsarbeiten. Der Trend, Bauteile im Multi-Materialverbund für eine erhöhte Funktionsintegration herzustellen, geht konträr mit der Forderung nach sortenreinen Stoffströmen für das Recycling. Die stoffschlüssige Kombination mehrerer Kunststoffsorten wird im Spritzgießverfahren u.a. durch das Overmolding-Verfahren und in der Extrusion durch die Mehrschichtextrusion realisiert. Sie spiegelt sich zudem im Pressverfahren zur Kombination von plattenförmigen Halbzeugen wider.

Bei einem thermoplastischen Träger und einer überspritzten, dünnen Schicht aus einem thermoplastischen Elastomer (TPE) beispielsweise wird die Materialkombination aus dem thermoplastischen Kunststoff und dem TPE derart ausgewählt, dass eine möglichst gute Haftung erzielt wird. Problematisch ist hierbei, dass am Ende des Produktlebenszyklus eine Auftrennung dieses Verbunds im Zuge des Recyclings nicht möglich ist. Das Bauteil wird daher entweder der thermischen Verwertung (Verbrennen) zugeführt oder wird zerkleinert in Anwendungen mit niedriger Materialanforderung gebracht. Der Markt für letztere Anwendungen ist allerdings bereits durch die Vielzahl der Verpackungsrückläufer weitestgehend besetzt.

Der Nachteil am aktuellen Stand der Technik liegt somit in der Entwertung thermoplastischer Kunststoffe aufgrund fehlender Trennmöglichkeiten, insbesondere für überspritzte Bauteile.

Ein Auftrennen mittels Lösungsmittel ist teuer und aufgrund der chemischen Struktur in vielen Fällen nicht möglich.

Eine weitere Anwendung zielt auf den Bereich der Rohrextrusion ab. Unterirdisch verlegte Gasrohre bestehen hauptsächlich aus dem Werkstoff PE, der kostengünstig und für den Zweck des Gastransports geeignet ist. Allerdings kann das darin transportierte Gas in geringen, aber nicht zu vernachlässigenden Mengen durch die Rohrwand diffundieren, und so zu einer Umweltbelastung führen. Es gibt Ansätze, die Rohre mit einer zweiten Schicht zu versehen, die eine höhere Gasdichtigkeit aufweist. Polyamid (PA) ist ein Material, welches für die Funktion geeignet ist, sich jedoch als inkompatibel zu dem PE erweist.

In der US 2005 0005 890 A1 wird ein Verfahren zur Produktion eines Ansaugkrümmers beschrieben, bei dem die Teile aus verschiedenen Materialien platziert und anschließend miteinander verklebt werden. Es werden verschiedene Möglichkeiten der Verklebung beschrieben, u.a. durch ein Hotmelt. wobei das beschriebene Verfahren eine chemische Verbindung zwischen den Materialien impliziert. Angegeben ist, dass die Teile zu Recyclingzwecken wieder voneinander getrennt werden können, wie dies erfolgen kann, ist allerdings nicht beschrieben.

Die US 8 905 861 B1 betrifft das Recycling eines Golfballs. Um die Außenhülle vom Kern trennen zu können ist eine Zwischenschicht vorgesehen, die bei Anregung von außen derart reagiert, dass die Außenhülle vom Kern getrennt werden kann. Als Beispiele sind dort u.a. hydrophile Materialien genannt, die beim Einführen eines Fluids expandieren, zwei Materialien, die chemisch reagieren oder ein Formgedächtniselement, das unter Temperatureinfluss eine Formänderung erfährt. Dies ist allerdings nicht mit dem Schmelzen einer Zwischenschicht vergleichbar.

US 20120061344 beschreibt ein Overmolding-Verfahren zur Herstellung eines Behälters, insbesondere einer Flasche. Der Behälter kann aus mehreren Schichten bestehen, die als Gasbarriere fungieren können. Angegeben ist auch ein RecyclingVerfahren, bei dem die Schicht, die per Overmolding-Verfahren aufgebacht wurde, wieder entfernt wird. Details zur Art und Weise des Entfernens und Auftrennens sind nicht offenbart.

Die WO 1999 058328 A1 beschreibt ein Material aus mehreren Schichten, die derart verbunden sind, dass während des Gebrauchs die genannten Schichten verbunden bleiben bzw. sogar eine verbesserte Verbindung haben, dann aber für das Recycling wieder voneinander getrennt werden können. Die Schichten können dabei durch gängige Verfahren wie Extrusion, Blasformen, Spritzgießen u.a. hergestellt werden. Auch für das Herstellen von mehrschichtigen Teilen sind eine Reihe von Verfahren bekannt, hier wird u.a. auch auf das Overmolding hingewiesen. Die Verbindungsschicht besteht hier aus wasserlöslichen Polymeren, die unter Recycling-Konditionen instabil werden.

In US 6 048 599 A ist die Verwendung von Polyethylen (PE), insbesondere LDPE, und von Polypropylen (PP) angegeben, wobei thermoplastische Elastomere nicht verwendet werden. Die Zwischenschicht unterscheidet sich von den anderen Schichten vor allem durch die ferromagnetischen Partikel. Nur im Falle einer Verbindung von PE mit PP ist Ethylenvinylacetat (EVA) als ein nicht-polyolefinischer Kunststoff zur Ausbildung einer Zwischenschicht angegeben. Die Herstellung der Verbindung zwischen den Fügepartnern, nicht nur die spätere Trennung beim Recycling, soll durch Aktivierung der Zwischenschicht erreicht werden.

Das in DE 2839640 C2 offenbarte Verfahren geht ebenfalls vom Schmelzverbinden von zwei Hartkomponenten aus, das heißt, die Zwischenschicht wird für die Herstellung der Verbindung aktiviert und erwärmt. Damit scheiden normale Kunststoffverarbeitungsverfahren wie Extrusion oder Spritzguss aus. Die Herstellung einer Verbindung einer Hart- und einer Weichkomponente aus einem TPE mit der Option, diese Verbindung später wieder lösen zu können, ist nicht offenbart.

Die Aufgabe der Erfindung besteht somit darin, die Herstellung von Mehrkomponenten-Verbundbauteilen aus unterschiedlichen thermoplastischen Kunststoffen zu ermöglichen und deren Recyclingfähigkeit zu verbessern oder erst zu schaffen.

Diese Aufgabe wird durch ein Verfahren mit den Merkmalen des Anspruchs 1 gelöst.

Die Lösung besteht in der Aufbringung einer thermoplastischen Zwischenschicht zwischen zwei Kunststoffkomponenten, die gewährleistet, dass in einem Recyclingprozess eine spätere bewusste Anregung dieser Zwischenschicht auf physikalischer Basis zwecks Erweichung und/oder Aufschmelzung und darüber eine Trennung der Kunststoffkomponenten erreicht werden kann.

Die beiden miteinander zu verbindenden Kunststoffkomponenten können verschieden oder identisch sein. Wesentlich ist nur, dass die Zwischenschicht sich von beiden Kunststoffkomponenten so weit unterscheidet, dass sie erwärmbar ist, ohne die Kunststoffkomponenten - außer in Bereichen unmittelbar an den Kontaktflächen - mit zu erweichen oder aufzuschmelzen.

Durch eine physikalische Einwirkung von außen wird die Zwischenschicht erweicht bzw. flüssig, und die Verbundpartner lassen sich voneinander lösen.

Neben Polypropylen als erstem thermoplastischen Kunststoff für eine Hartkomponente kann auch PC/ABS ein typisches Material für den Träger eines TPE-Materials, insbesondere TPU, als zweitem thermoplastischem Kunststoff für eine Weichkomponente fungieren. Hier muss eine Zwischenschicht eingesetzt werden, die aus dem gleichen Materialstamm besteht und über induktionsaffine Füllstoffe verfügt, um die gute Wärmeformbeständigkeit, die der Materialverbund mit sich bringt, nicht zu schwächen. Der gleiche Materialstamm führt am Ende zu einer höheren Sortenreinheit.

Die Zwischenschicht wird durch einen dritten thermoplastischen Kunststoff in Form eines mit Maleinsäureanhydrid gepfropftes Polyethylen-n-butylacrylat (EBA) realisiert, der zum einen die Haftung der Verbundpartner im Gebrauch und zum anderen eine Verbundtrennung durch thermische Einwirkung gewährleistet.

Ein Beispiel für Materialverbunde, in denen die Zwischenschicht eingesetzt werden kann, ist zum Beispiel ein Verbund aus einem Polypropylen (PP) und einem TPU. Die Verbindung aus diesen Materialien weist ohne Vorbehandlung keine Haftung auf.

Die physikalische Einwirkung kann im einfachsten Fall ein Durchwärmen des gesamten Verbunds sein. Die thermischen Eigenschaften müssen dabei auf die Verbundpartner abgestimmt werden, um ein gleichzeitiges Aufschmelzen der Verbundpartner zu vermeiden.

Eine weitere Variante des physikalischen Einwirkens besteht in der Einbringung von induktionsaffinen Additiven (z.B. Partikel von Ferriten), die über Induktion von außen aktiviert werden und zur Erwärmung und damit zum Aufschmelzen der Zwischenschicht führen. Möglich ist auch, wenigstens eine der Komponenten transparent auszubilden und Infrarotstrahlung absorbierende Partikel in der Zwischenschicht vorzusehen.

Besser ist jedoch, wenn der dritte thermoplastische Kunststoff der Adhäsions-Zwischenschicht eine niedrigere Schmelztemperatur hat als die Kunststoffe, aus denen die zu verbindenden Teile gebildet sind, weil dadurch beim späteren Recycling auch direkt an den Fügeflächen eine eindeutige stoffliche Trennung möglich ist.

Durch die einfache und sortenreine Trennmöglichkeit können die bei dem Verbundbauteil eingesetzten thermoplastischen Kunststoffe sortenrein erneut verwendet und wieder zu hochwertigen Produkten verarbeitet werden. Die Folge ist, dass der eingesetzte Kunststoff deutlich länger im Umlauf ist, was eine Schonung der Ressourcen und ein nachhaltiger Umgang mit dem Kunststoff bedeutet.

Die Zwischenschicht kann aus einem Hotmelt bestehen, der eine ausreichende Haftung zu den beiden Verbundpartnern und im Gebrauchstemperaturbereich die notwendige Kohäsionsfestigkeit aufweist.

Die Umsetzung des Verfahrens als Mehrkomponentenspritzgießen sieht entweder das Einspritzen der Zwischenschicht als weitere Komponente oder ein Aufsprühen des Hotmelts/der Flüssigkeit nach Einspritzen der ersten Komponente vor, auf das dann die zweite Komponente gespritzt wird. Ein Erstarren bzw. Abdunsten des Hotmelts/der Flüssigkeit vor dem Einspritzen der zweiten Komponente verhindert ein Abtrag der Schicht durch den Einspritzvorgang. Bei dem Recyclingvorgang können durch Aufschmelzen der Zwischenschicht die beiden Komponenten voneinander getrennt werden.

Für extrudierte Verbundbauteile ist ein Mehrschichtextrusionsverfahren vorgesehen, bei dem eine Coextrusion des Hotmelts zwischen den Kunststoffschichten vorgesehen ist. Im Falle eines Mehrschichtrohres lassen sich bei dem Recyclingvorgang die Schichten durch die schmelzeförmige Zwischenschicht gegeneinander verschieben und das Innenrohr kann aus dem Außenrohr gedrückt werden. Alternativ kann auch nach einer Vorzerkleinerung des Mehrschichtrohres eine Trennung über Aktivierung der Zwischenschicht und gleichzeitiger Prallbeanspruchung oder Rüttelbewegung beispielsweise in umgebauten, herkömmlichen Rüttlern für Schüttgüter, erfolgen.

Bei einem Rohr kann die Zwischenschicht nicht nur der Recyclingfähigkeit dienen, sondern auch eine Haftung zwischen den Schichten herstellen, das heißt, als sogenannter *Coupling Agent* dienen, und kann gleichzeitig als Recycling-Schicht fungieren, indem sie durch äußere Aktivierung während des Trennens erwärmt wird.

Eine weitere Ausbildung des erfindungsgemäßen Verfahrens sieht einen Pressvorgang vor, bei dem ein Hotmelt oder ein Folienabschnitt als Zwischenschicht zwischen plattenförmigen Halbzeugen aufgebracht wird. Bei dem späteren Recyclingvorgang können durch Aufschmelzen der Zwischenschicht die einzelnen Platten voneinander getrennt werden.

Die Zwischenschicht wird durch ein thermoplastisches Kunststoffmaterial gebildet, das aus einem oder mehreren Homo- oder Copolymeren, die im Fall mehrerer Homo- oder Copolymere ein Schichtverbund oder ein Polymerblend darstellt, und aus keinem, einem oder mehreren Additiven bzw. Füllstoffen zur Einstellung der Viskosität, der Schmelztemperatur, der Haftung zu den Verbundpartnern, der Leitfähigkeit und der Anregung durch Induktionsspulen besteht.

Die Zwischenschicht wird je nach Verarbeitungsart unterschiedlich eingestellt:
- Für das Spritzgießen wird entweder im 3K-Spritzgießprozess die Zwischenschicht als Spritzgieß-Kunststofftype eingestellt.
- Für das Aufsprühen wird die Viskosität des Materials reduziert, damit ein Aufsprühen möglich ist.
- Für das Extrusionsverfahren wird eine höhere Viskosität verlangt.
- Für den Einsatz in Pressen ist ein Sprüh-, oder Rakelauftrag notwendig oder es wird eine vorextrudierte Folie als Zwischenschicht verwendet.

Für den Gebrauch des Bauteils muss die Zwischenschicht eine ausreichend große Haftung zu den Verbundpartnern aufweisen. Zudem ist eine ausreichend hohe Kohäsionsfestigkeit notwendig. Letzteres kann zum Beispiel durch Faserverstärkung erreicht werden oder durch Verwendung von höherfesten Polymeren.

Für die Trennung des Verbunds muss die Zwischenschicht eine geringere Schmelztemperatur als die Verbundpartner aufweisen. Diese darf auch nicht zu niedrig sein, damit eine Erweichung des Verbunds im Gebrauch nicht zum Versagen des Bauteils führt. Wenn induktionsaffine Additive eingesetzt werden, muss die Schmelztemperatur nicht derart niedrig gewählt werden, da ein lokales Aufschmelzen der Zwischenschicht die Verbundpartner nicht direkt zum Aufschmelzen bringt.

Die Erfindung wird nachfolgend mit Bezug auf die Zeichnungen näher erläutert. Die Figuren zeigen im Einzelnen:
- Fig. 1: ein Mehrkomponenten-Verbundbauteil in schematischer Schnittansicht;
- Fig. 2: ein Zwischenschritt bei der Herstellung des Verbundbauteils nach einer ersten Ausführungsform des Verfahrens;
- Fig. 3A-3C: die Herstellung eines Verbundbauteils nach einer zweiten Ausführungsform des Verfahrens;

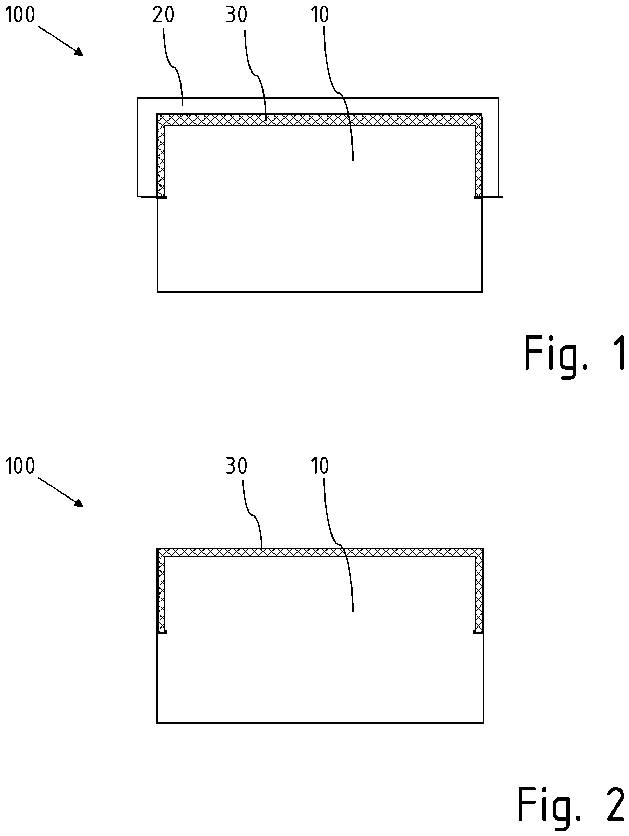

In Figur 1 ist ein nach der Erfindung hergestelltes Mehrkomponenten-Verbundbauteil 100 dargestellt. Es umfasst einen Kunststoffkörper 10 aus einem harten thermoplastischen Kunststoff, der im Bereich seiner Oberseite teilweise mit einem zweiten Kunststoffkörper 20 aus einem thermoplastischen Elastomer überdeckt ist. Die Kontaktzone zwischen den Kunststoffkörpern 10, 20 wird durch eine thermoplastische Adhäsionszwischenschicht 30 gebildet. Die Adhäsionszwischenschicht 30 wirkt wie eine Klebschicht und stellt eine stoffschlüssige Verbindung der Kunststoffkörper 10, 20 her. Das Mehrkomponenten-Verbundbauteil 100 kann insbesondere in einem Mehrfach-Spritzgießverfahren hergestellt werden, wobei in einem ersten Verfahrensschritt der Kunststoffkörper 10 aus der Hartkomponente hergestellt wird. In dem Bereich, der als Kontaktzone zu dem später herzustellenden Kunststoffkörper 20 vorgesehen ist, weist der Kunststoffkörper 10 eine Vertiefung auf, welche die Zwischenschicht 30 aufnehmen kann. Der Zwischenschritt nach Aufbringung der Zwischenschicht 30 ist in Figur 2 gezeigt.

Für die insgesamt drei Komponenten werden in dem Ausführungsbeispiel folgende Werkstoffe verwendet:

| Anteil | Kunststoff | | Vicat-Erweichungstemperatur A50 | Schmelztemperatur Ts |
|---|---|---|---|---|
| Kunststoffkörper 10 (Hartkomponente) | TK1: | Polypropylen (PP) | 154 °C | 165 °C |
| Zwischenschicht 30 | TK3: | chemisch modifiziertes, mit Maleinsäureanhydrid gepfropftes EBA (Polyethylen-n-butylacrylat) | 70 °C | 97 °C |
| Kunststoffkörper 20 (Weichkomponente) | TTK2. | PU | 76 °C | 117 °C |

Zwischen der Zwischenschicht 30 und den darüber verbundenen Kunststoffkörpern 10, 20 besteht bei der Erweichungstemperatur eine Temperaturdifferenz von 6 °C bzw. 84 °C und bei der Schmelztemperatur eine Temperaturdifferenz von mehr als 20 °C. Daher kann die Zwischenschicht 30 in einem späteren Recyclingprozess gut erwärmt werden, um den Verbund aufzulösen, während der Wärmeeintrag in die Kunststoffkörper 10, 20 gering ist und deren Erweichungs- bzw. Schmelztemperatur nicht oder allenfalls in Randzonen, die in Kontakt zur Zwischenschicht 30 sind, erreicht wird.

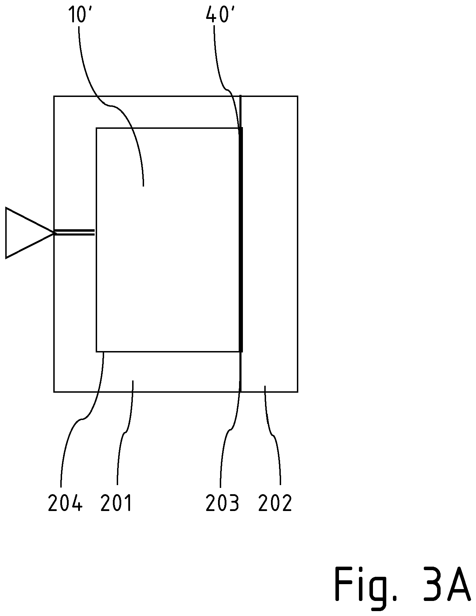

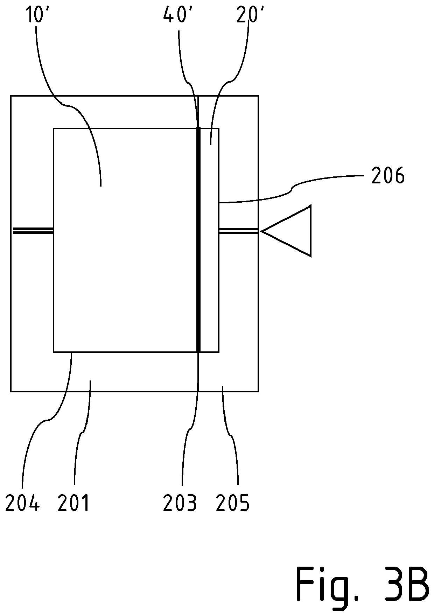

Ein anderes Verfahren zur Herstellung eines Mehrkomponenten-Verbundbauteils ist in den Figuren 3A und 3B dargestellt. Dafür wird ein Spritzgießwerkzeug bereitgestellt, das eine Werkzeughälfte 201 mit einer ersten Formkavität besitzt und eine zweite Werkzeughälfte, die die Formkavität abdeckt. In der Trennebene zwischen den Werkzeughälften 201, 202 wird ein Folienzuschnitt angeordnet, welcher die Adhäsions-Zwischenschicht 30 ausbildet. Diese wird zunächst von links angespritzt, um einen Kunststoffkörper 10' aus einem harten thermoplastischen Kunststoff zu bilden, wie in Figur 3A dargestellt. Durch Kühlung der Werkzeughälfte 202 wird verhindert, dass die an dieser anliegende Adhäsions-Zwischenschicht 30 aufgeschmolzen wird. Anschließend wird an der anderen Seite der Adhäsions-Zwischenschicht 30 eine andere Werkzeughälfte 205 mit einer weiteren Formkavität 206 platziert, so dass die Adhäsions-Zwischenschicht 30 von deren anderen Seite mit einer Weichkomponenten hinterspritzt werden kann, um einen zweiten Kunststoffkörper 20' auszubilden Der Kontakt mit der heißen Schmelze während des Einspritzens und der damit verbundene Schereintrag ist nur sehr kurz, sodass die Folie nicht verschoben wird. Ein leichtes Anschmelzen während der Nachdruck- und Kühlphase ist nicht nachteilig. Die Folie kühlt mit der Abkühlung der Kunststoffkörper im Werkzeug auch selbst ab.

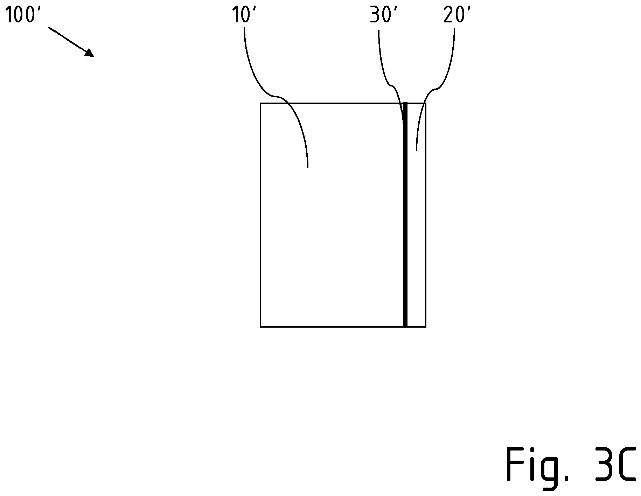

Die Kunststoffkörper 10', 20' sind somit über die beidseitig hinterspritzte Folie stoffschlüssig miteinander verbunden, so dass ein Mehrkomponenten-Verbundbauteil 100' aus drei Komponenten gebildet ist, siehe Figur 3C.

## Patentansprüche

1. Verfahren zur Herstellung eines Mehrkomponenten-Verbundbauteils, (100; 100') mit wenigstens zwei stoffschlüssig miteinander verbundenen Kunststoffkörpern (10, 20; 10', 20'), welche jeweils aus unterschiedlichen thermoplastischen Kunststoffen TK1, TK2 bestehen, von denen einer eine Hartkomponente des Verbundbauteils bildet und der andere eine Weichkomponente des Verbundbauteils,
wobei
- ein erster Kunststoffkörper (10; 10') hergestellt wird, der aus einem ersten thermoplastischen Kunststoff TK1 besteht, und ein zweiter Kunststoffkörper (20; 20'), der aus einem zweiten, von dem ersten Kunststoff unterschiedlichen thermoplastischen Kunststoff TK2 besteht und der stoffschlüssig mit dem ersten Kunststoffkörper (10; 10') verbunden ist,
- zwischen den Kunststoffkörpern (10, 10'; 20, 20') eine thermoplastische Adhäsions-Zwischenschicht (30; 30') eingefügt wird, über welche der erste und der zweite Kunststoffkörper (10, 20; 10', 20') stoffschlüssig miteinander verbunden werden und
- die Adhäsions-Zwischenschicht (30; 30') aus einem dritten thermoplastischen Kunststoff TK3 gebildet ist, der bei einer Temperatur erweichbar oder aufschmelzbar ist, bei welcher bei den beiden Kunststoffkörpern (10, 20; 10', 20') die jeweilige Erweichungstemperatur oder Schmelztemperatur nicht erreicht wird,
**dadurch gekennzeichnet,**
- **dass** der erste thermoplastische Kunststoff TK1 für die Hartkomponente Polypropylen (PP) oder ein Polycarbonat-Acrylnitrilbutadienstyrol-Blend (PC/ABS) ist,
- **dass** der zweite thermoplastische Kunststoff TK2 für eine Weichkomponente ein thermoplastisches Elastomer (TPE) ist und
- **dass** der dritte thermoplastische Kunststoff TK3 ein mit Maleinsäureanhydrid gepfropftes Polyethylen-n-butylacrylat (EBA) ist

2. Verfahren nach Anspruch 1, **dadurch gekennzeichnet, dass** die Adhäsions-Zwischenschicht (30; 30') aus einem dritten thermoplastischen Kunststoff TK3 gebildet ist, dessen Erweichungstemperatur T_{E3} kleiner als die Schmelztemperatur T_{S1} , T_{S2} der beiden Kunststoffkörper (10, 20; 10', 20') ist.

3. Verfahren nach Anspruch 2, **dadurch gekennzeichnet, dass** die Schmelztemperatur T_{S3} der Adhäsions-Zwischenschicht (30; 30') kleiner als die Schmelztemperatur T_{S1} , T_{S2} der beiden Kunststoffkörper (10, 20; 10', 20') ist.

4. Verfahren nach einem der Ansprüche 1 bis 3, **dadurch gekennzeichnet, dass** die Adhäsions-Zwischenschicht (30; 30') eine aus dem dritten thermoplastischen Kunststoff TK3 gebildete thermoplastische Matrix und darin eingebettete Partikel zur Absorption einer von außen auf das Verbundbauteil (100; 100') wirkenden elektromagnetischen Strahlung umfasst.

5. Verfahren nach Anspruch 4, **dadurch gekennzeichnet, dass** die Adhäsions-Zwischenschicht (30; 30') eine aus dem dritten thermoplastischen Kunststoff TK3 gebildete thermoplastische Matrix und darin eingebettete magnetisch suszeptible Partikel umfasst.

6. Verfahren nach Anspruch 4 oder 5, **dadurch gekennzeichnet,**
- **dass** der erste und/oder der zweite Kunststoffkörper (10; 10') aus einem für Infrarotstrahlung durchlässigen Kunststoff ausgebildet sind und
- **dass** die Adhäsions-Zwischenschicht (30; 30') aus einem Infrarotstrahlung absorbierenden Kunststoff gebildet ist.

7. Verfahren nach einem der vorhergehenden Ansprüche, **dadurch gekennzeichnet, dass** der zweite thermoplastische Kunststoff TK2 ein thermoplastisches Polyurethan (TPU) ist.

8. Verfahren nach einem der vorhergehenden Ansprüche, **gekennzeichnet durch** folgende Schritte:
- Herstellen des ersten Kunststoffkörpers (10) mit wenigstens einer Fügefläche (11) **durch** Spritzgießen des ersten thermoplastischen Kunststoffs TK1;
- Aufbringen der Adhäsions-Zwischenschicht (30; 30') auf die Fügefläche;
- Herstellen des zweiten Kunststoffkörpers (20) mit wenigstens einer Fügefläche (21), die sich an die mit der Adhäsions-Zwischenschicht (30; 30') bedeckte Fügefläche des ersten Kunststoffkörpers (10) anlegt, **durch** Spritzgießen des zweiten thermoplastischen Kunststoffs TK2.

9. Verfahren nach Anspruch 8, **dadurch gekennzeichnet, dass** die Adhäsions-Zwischenschicht (30; 30') als Hotmelt auf die Fügefläche aufgesprüht wird.

10. Verfahren nach Anspruch 8, **dadurch gekennzeichnet, dass** die Adhäsions-Zwischenschicht (30; 30') durch Spritzgießen auf die Fügefläche aufgespritzt wird.

11. Verfahren nach Anspruch 8, **dadurch gekennzeichnet, dass** die Adhäsions-Zwischenschicht (30') als Folienabschnitt (40') ausgebildet ist, der auf der einen Seite mit dem ersten thermoplastischen Kunststoffs TK1 zur Ausbildung des ersten Kunststoffkörpers (10') hinterspritzt wird und auf der anderen Seite mit dem zweiten thermoplastischen Kunststoff TK2 zur Ausbildung des zweiten Kunststoffkörpers (20') hinterspritzt wird.

12. Verfahren nach Anspruch 8, **gekennzeichnet durch** folgende Schritte:
- Herstellen des ersten Kunststoffkörpers mit wenigstens einer Fügefläche **durch** Spritzgießen des ersten thermoplastischen Kunststoffs TK1;
- Herstellen des zweiten Kunststoffkörpers mit wenigstens einer Fügefläche **durch** Spritzgießen des zweiten thermoplastischen Kunststoffs TK2;
- Einfügen einer aus dem dritten thermoplastischen Kunststoff TK3 gebildeten Folie zwischen den Fügeflächen;
- Verpressen des ersten Kunststoffkörpers und des zweiten Kunststoffkörpers mitsamt der zur Ausbildung der Adhäsions-Zwischenschicht eingefügten Folie.

13. Verfahren nach einem der Ansprüche 1 bis 7, **gekennzeichnet durch** folgende Schritte:
- Herstellen des ersten Kunststoffkörpers als Folie oder Tafel mit wenigstens einer Fügefläche **durch** Extrusion des ersten thermoplastischen Kunststoffs TK1 oder Pressen eines Halbzeugs;
- Herstellen des zweiten Kunststoffkörpers als Folie oder Tafel mit wenigstens einer Fügefläche **durch** Extrusion des zweiten thermoplastischen Kunststoffs TK2 oder Pressen eines Halbzeugs;
- Einfügen einer aus dem dritten thermoplastischen Kunststoff TK3 gebildeten Folie zwischen den Fügeflächen;
- Verpressen des ersten Kunststoffkörpers und des zweiten Kunststoffkörpers mitsamt der zur Ausbildung der Adhäsions-Zwischenschicht eingefügten Folie.

14. Verfahren nach einem der Ansprüche 1 bis 7, **gekennzeichnet durch** folgende Schritte:
- Bereitstellen einer Folie oder Tafel aus dem ersten thermoplastischen Kunststoff TK1;
- Auflegen einer aus dem dritten thermoplastischen Kunststoff TK3 gebildeten Folie;
- Auflegen einer Folie oder Tafel aus dem zweiten thermoplastischen Kunststoff TK2;
- Verpressen des Verbundes der Folien und/oder Tafeln zur Ausbildung des mehrschichtigen Verbundbauteils.

15. Verfahren nach einem der vorhergehenden Ansprüche 1 bis 7, **gekennzeichnet durch** folgende Schritte:
- Bereitstellen einer Schmelze aus dem ersten thermoplastischen Kunststoff TK1 mittels eines Extruders und Zuführung zu einem Extrusionsdüsenwerkzeug;
- Bereitstellen einer Schmelze aus dem zweiten thermoplastischen Kunststoff TK2 mittels eines Extruders und Zuführung zu einem Extrusionsdüsenwerkzeug;
- Bereitstellen einer Schmelze aus dem dritten thermoplastischen Kunststoff TK3 mittels eines Extruders und Zuführung zu einem Extrusionsdüsenwerkzeug;
- Ausformen eines Profilstrangs, wobei wenigstens ein erster Profilbereich aus dem ersten Kunststoff TK1 gebildet ist und wenigstens ein zweiter Profilbereich aus dem zweiten Kunststoff TK2 gebildet ist, wobei die Profilbereiche **durch** wenigstens eine Adhäsions-Zwischenschickt aus dem dritten Kunststoff TK3 miteinander verbunden sind.
- Kühlen und/oder Kalibrieren des Profilstrangs;
- Ablängen des Profilstrangs zum Erhalt des Mehrkomponenten-Verbundbauteils.

## Claims

1. Method for producing a multi-component composite structural part (100; 100'), with at least two plastics elements (10, 20; 10', 20') materially connected to one another and each consisting of different thermoplastics TK1, TK2, of which one forms a hard component of the composite structural part and the other a soft component of the composite structural part,
wherein
- a first plastics element (10; 10') is produced, which consists of a first thermoplastic TK1, and a second plastics element (20; 20'), which consists of a second thermoplastic TK2, different from the first plastic, and which is materially connected to the first plastics element (10; 10'),
- between the plastics elements (10, 10'; 20, 20') a thermoplastic adhesion interlayer (30; 30') is inserted, via which the first and second plastics elements (10, 20; 10', 20') are materially connected to one another, and
- the adhesion interlayer (30; 30') is formed of a third thermoplastic TK3, which is softenable or meltable at a temperature at which neither of the plastics elements (10, 20; 10', 20') have reached the respective softening temperature or melting temperature,
**characterized**
- **in that** the first thermoplastic TK1 for the hard component is polypropylene (PP) or a polycarbonate/acrylonitrile-butadiene-styrene blend (PC/ABS),
- **in that** the second thermoplastic TK2 for a soft component is a thermoplastic elastomer (TPE), and
- **in that** the third thermoplastic TK3 is a maleic anhydride-grafted polyethylene-n-butyl acrylate (EBA).

2. Method according to Claim 1, **characterized in that** the adhesion interlayer (30; 30') is formed of a third thermoplastic TK3, whose softening temperature T_{E3} is less than the melting temperature T_{S1}, T_{S2} of the two plastics elements (10, 20; 10', 20').

3. Method according to Claim 2, **characterized in that** the melting temperature T_{S3} of the adhesion interlayer (30; 30') is less than the melting temperature T_{S1}, T_{S2} of the two plastics elements (10, 20; 10', 20').

4. Method according to any of Claims 1 to 3, **characterized in that** the adhesion interlayer (30; 30') comprises a thermoplastic matrix formed of the third thermoplastic TK3 and particles embedded in said matrix for absorbing electromagnetic radiation which acts on the composite structural part (100; 100') from outside.

5. Method according to Claim 4, **characterized in that** the adhesion interlayer (30; 30') comprises a thermoplastic matrix formed of the third thermoplastic TK3 and magnetically susceptible particles embedded in said matrix.

6. Method according to Claim 4 or 5, **characterized**
- **in that** the first and/or the second plastic element (10; 10') are/is formed of a plastic which is transparent to infrared radiation, and
- **in that** the adhesion interlayer (30; 30') is formed of a plastic which absorbs infrared radiation.

7. Method according to any of the preceding claims, **characterized in that** the second thermoplastic TK2 is a thermoplastic polyurethane (TPU).

8. Method according to any of the preceding claims, **characterized by** steps as follows:
- producing the first plastics element (10) with at least one joining face (11) by injection moulding of the first thermoplastic TK1;
- applying the adhesion interlayer (30; 30') to the joining face;
- producing the second plastics element (20) with at least one joining face (21), which lies against the joining face of the first plastics element (10), covered with the adhesion interlayer (30; 30'), by injection moulding of the second thermoplastic TK2.

9. Method according to Claim 8, **characterized in that** the adhesion interlayer (30; 30') is applied to the joining face by spraying as a hotmelt.

10. Method according to Claim 8, **characterized in that** the adhesion interlayer (30; 30') is applied to the joining face by injection moulding.

11. Method according to Claim 8, **characterized in that** the adhesion interlayer (30') is configured as a film portion (40') which is in-mould coated on one side with the first thermoplastic TK1 to form the first plastics element (10') and is in-mould coated on the other side with the second thermoplastic TK2 to form the second plastics element (20').

12. Method according to Claim 8, **characterized by** steps as follows:
- producing the first plastics element with at least one joining face by injection moulding of the first thermoplastic TK1;
- producing the second plastics element with at least one joining face by injection moulding of the second thermoplastic TK2;
- inserting a film formed of the third thermoplastic TK3 between the joining faces;
- pressing the first plastics element and the second plastics element together with the film inserted for forming the adhesion interlayer.

13. Method according to any of Claims 1 to 7, **characterized by** steps as follows:
- producing the first plastics element as a film or tablet with at least one joining face by extrusion of the first thermoplastic TK1 or compression moulding of an intermediate product;
- producing the second plastics element as a film or tablet with at least one joining face by extrusion of the second thermoplastic TK2 or compression moulding of an intermediate product;
- inserting a film formed of the third thermoplastic TK3 between the joining faces;
- pressing the first plastics element and the second plastics element together with the film inserted for forming the adhesion interlayer.

14. Method according to any of Claims 1 to 7, **characterized by** steps as follows:
- providing a film or tablet of the first thermoplastic TK1;
- placing on a film formed of the third thermoplastic TK3;
- placing on a film or tablet of the second thermoplastic TK2;
- pressing the assembly of the films and/or tablets to form the multi-layer composite structural part.

15. Method according to any of preceding Claims 1 to 7, **characterized by** steps as follows:
- providing a melt of the first thermoplastic TK1 via an extruder and supplying it to an extrusion die;
- providing a melt of the second thermoplastic TK2 via an extruder and supplying it to an extrusion die;
- providing a melt of the third thermoplastic TK3 via an extruder and supplying it to an extrusion die;
- shaping a profiled extrudate, where at least one first profile region is formed of the first plastic TK1 and at least one second profile region is formed of the second plastic TK2, the profile regions being connected to one another by at least one adhesion interlayer of the third plastic TK3;
- cooling and/or calibrating the profiled extrudate;
- separating the profiled extrudate into lengths to give the multi-component composite structural part.

## Revendications

1. Procédé de fabrication d'une pièce composite multi-composant (100 ; 100') comportant au moins deux corps plastiques (10, 20 ; 10', 20') assemblés l'un à l'autre par correspondance de matière, qui sont constitués de deux plastiques thermoplastiques différents TK1, TK2, dont l'un forme un composant rigide de la pièce composite et l'autre un composant souple de la pièce composite,
dans lequel
- on fabrique un premier corps plastique (10 ; 10'), qui est constitué d'un premier plastique thermoplastique TK1, et un deuxième corps plastique (20 ; 20'), qui est constitué d'un deuxième plastique thermoplastique TK2 différent du premier plastique, et qui est assemblé par liaison avec correspondance de matière au premier corps plastique (10 ; 10'),
- entre les corps plastiques (10, 10' ; 20, 20'), on insère une couche intermédiaire d'adhérence thermoplastique (30 ; 30'), grâce à laquelle le premier et le deuxième corps plastiques (10, 20 ; 10', 20') sont assemblés l'un à l'autre par liaison avec correspondance de matière, et
- la couche intermédiaire d'adhérence (30 ; 30') est formée d'un troisième plastique thermoplastique TK3, qui peut être ramolli ou fondu à une température à laquelle n'est pas atteinte la température de ramollissement ou la température de fusion de l'un ou l'autre corps plastique (10, 20 ; 10', 20'),
**caractérisé en ce que**
- le premier plastique thermoplastique TK1 pour le composant rigide est le polypropylène (PP) ou un mélange polycarbonate-acrylonitrile-butadiène-styrène (PC/ABS),
- le deuxième plastique thermoplastique TK2 pour un composant souple est un élastomère thermoplastique (TPE) et
- le troisième plastique thermoplastique TK3 est un polyéthylène-acrylate de n-butyle (EBA) greffé par de l'anhydride maléique.

2. Procédé selon la revendication 1, **caractérisé en ce que** la couche intermédiaire d'adhérence (30 ; 30') est formée d'un troisième plastique thermoplastique TK3, dont la température de ramollissement T_{E3} est inférieure à la température de fusion T_{S1}, T_{S2} des deux corps plastiques (10, 20 ; 10', 20').

3. Procédé selon la revendication 2, **caractérisé en ce que** la température de fusion T_{S3} de la couche intermédiaire d'adhérence (30 ; 30') est inférieure à la température de fusion T_{S1}, T_{S2} des deux corps plastiques (10, 20 ; 10', 20').

4. Procédé selon l'une des revendications 1 à 3, **caractérisé en ce que** la couche intermédiaire d'adhérence (30 ; 30') comprend une matrice thermoplastique formée du troisième plastique thermoplastique TK3 et des particules qui y sont incorporées, pour l'absorption d'un rayonnement électromagnétique agissant de l'extérieur sur la pièce composite (100 ; 100').

5. Procédé selon la revendication 4, **caractérisé en ce que** la couche intermédiaire d'adhérence (30 ; 30') comprend une matrice thermoplastique formée du troisième plastique thermoplastique TK3 et des particules à susceptibilité magnétique qui y sont incorporées.

6. Procédé selon la revendication 4 ou 5, **caractérisé en ce que**
- le premier et/ou le deuxième corps plastique (10 ; 10') sont constitués d'un plastique transparent au rayonnement infrarouge, et
- la couche intermédiaire d'adhérence (30 ; 30') est formée d'un plastique absorbant le rayonnement infrarouge.

7. Procédé selon l'une des revendications précédentes, **caractérisé en ce que** le deuxième plastique thermoplastique TK2 est un polyuréthane thermoplastique (TPU).

8. Procédé selon l'une des revendications précédentes, **caractérisé par** les étapes suivantes :
- fabrication d'un premier corps plastique (10) ayant au moins une surface de jonction (11), par moulage par injection du premier plastique thermoplastique TK1 ;
- application de la couche intermédiaire d'adhérence (30 ; 30') sur la surface de jonction ;
- fabrication du deuxième corps plastique (20) ayant une surface de jonction (21), qui s'appuie contre la surface de jonction recouverte de la couche intermédiaire d'adhérence (30 ; 30') du premier corps plastique (10), par moulage par injection du deuxième plastique thermoplastique TK2.

9. Procédé selon la revendication 8, **caractérisé en ce que** la couche intermédiaire d'adhérence (30 ; 30') est pulvérisée sous forme d'un adhésif thermofusible sur la surface de jonction.

10. Procédé selon la revendication 8, **caractérisé en ce que** la couche intermédiaire d'adhérence (30 ; 30') est projetée sur la surface de jonction par moulage par injection.

11. Procédé selon la revendication 8, **caractérisé en ce que** la couche intermédiaire d'adhérence (30') est conçue comme une partie de feuille (40'), qui est injectée par l'arrière sur la face comportant le premier plastique thermoplastique TK1 pour former le premier corps plastique (10'), et qui est injectée par l'arrière sur l'autre face comportant le deuxième plastique thermoplastique TK2 pour former le deuxième corps plastique (20').

12. Procédé selon la revendication 8, **caractérisé par** les étapes suivantes :
- fabrication du premier corps plastique ayant au moins une surface de jonction, par moulage par injection du premier plastique thermoplastique TK1 ;
- fabrication du deuxième corps plastique ayant au moins une surface de jonction, par moulage par injection du deuxième plastique thermoplastique TK2 ;
- insertion, entre les surfaces de jonction, d'une feuille formée du troisième plastique thermoplastique TK3 ;
- compression du premier corps plastique et du deuxième corps plastique, en même temps que de la feuille insérée pour la formation de la couche intermédiaire d'adhérence.

13. Procédé selon l'une des revendications 1 à 7, **caractérisé par** les étapes suivantes :
- fabrication d'un premier corps plastique sous forme d'une feuille ou d'une plaque ayant au moins une surface de jonction, par extrusion du premier plastique thermoplastique TK1 ou pressage d'un semi-produit ;
- fabrication d'un deuxième corps plastique sous forme d'une feuille ou d'une plaque ayant au moins une surface de jonction, par extrusion du deuxième plastique thermoplastique TK2 ou pressage d'un semi-produit ;
- insertion, entre les surfaces de jonction, d'une feuille formée du troisième plastique thermoplastique TK3 ;
- compression du premier corps plastique et du deuxième corps plastique, en même temps que de la feuille insérée pour former la couche intermédiaire d'adhérence.

14. Procédé selon l'une des revendications 1 à 7, **caractérisé par** les étapes suivantes :
- fourniture d'une feuille ou d'une plaque en le premier plastique thermoplastique TK1 ;
- pose d'une feuille formée du troisième plastique thermoplastique TK3 ;
- pose d'une feuille ou d'une plaque du deuxième plastique thermoplastique TK2 ;
- compression du composite des feuilles et/ou des plaques pour former la pièce composite multicouche.

15. Procédé selon l'une des revendications précédentes 1 à 7, **caractérisé par** les étapes suivantes :
- fourniture d'une masse fondue du premier plastique thermoplastique TK1 à l'aide d'une extrudeuse, et amenée à une machine à buses d'extrusion ;
- fourniture d'une masse fondue du deuxième plastique thermoplastique TK2 à l'aide d'une extrudeuse, et amenée à une machine à buses d'extrusion ;
- fourniture d'une masse fondue du troisième plastique thermoplastique TK3 à l'aide d'une extrudeuse, et amenée à une machine à buses d'extrusion ;
- formation d'un boudin profilé, au moins une première zone du profilé étant formée du premier plastique TK1 et au moins une deuxième zone du profilé étant formée du deuxième plastique TK2, les zones du profilé étant reliées l'une à l'autre par au moins une couche intermédiaire d'adhérence en le troisième plastique TK3 ;
- refroidissement et/ou calibrage du boudin profilé ;
- découpe à la longueur du boudin profilé pour obtenir la pièce composite multi-composant.
